# EUROPEAN PATENT APPLICATION

(11) **EP 3 479 986 A1**
(43) Date of publication of application: **08.05.2019**
(21) Application number: 17199852.9
(22) Date of filing: 03.11.2017
(51) Int. Cl.: B29C 44/12, B32B 5/20, B32B 25/10

(54) **A POLYURETHANE COMPOSITE PANEL FOR CONTAINER FLOORING, METHOD FOR ITS PREPARATION AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention provides a polyurethane composite panel for container flooring, method for its preparation and use thereof. The polyurethane composite panel for container flooring comprises two fiber-reinforced material layers and a polyurethane layer, wherein the polyurethane layer is applied between the two fiber-reinforced material layers with the polyurethane penetrating into the fiber-reinforced material layers.

## Description

### Field of the invention

The present invention provides a polyurethane composite panel for container flooring, method for its preparation and use thereof.

### Background of the invention

Container transportation is an important way in the transport of goods, and has advantages of rapid loading and unloading, easy transport and high transport mechanization and so on. In recent years, container transport has been developing rapidly. There are hundreds of millions of containers currently in use in the world, and this number is continuously increasing each year with a great rate. At present, China's container production accounts for the vast majority of the world, with the top five container manufacturing plants all in China.

Container flooring needs to meet the high requirements in terms of durability, horizontal and vertical strength, bending strength, stiffness and so on, and thereby ordinary panels usually cannot meet these requirements. For decades, container flooring has been made by using plywood based on the panel of high-density hardwood (Apitong) grown in tropical rainforests.

This dependence on the panel of high-density hardwood limits the manufacture of container flooring in terms of cost and environmental protection. On one hand, this hardwood panel mostly relies on imports. On the other hand, the growth cycle of this high-density hardwood tree species is very long, generally up to a hundred years or even longer. Increasing demand has led to a sharp increase in harvests and thereby a reduction of this resource. Some countries have taken measures to limit the logging of high-density hardwood trees, resulting in that the price has doubled within a few years. Massive cutting down of trees in rare tropical rainforests leads to serious damage to the ecological environment and thus is not conducive to the development of low-carbon economy.

In order to protect the ecological environment and reduce the consumption of tropical rainforest resources, it is necessary to develop a replacement product for panel for container flooring based on tropical rainforest high-density hardwood.

At present, there are a number of patent documents disclosing methods for manufacturing container flooring.

CN1192420A discloses a container flooring and its manufacturing method. Medium-density wood is used as raw material, and mixed with an appropriate amount of bamboo. The method comprises mechanical processing, application of adhesive, assembly, and the following hot pressing to form a substrate. Then, 0.2 to 3.0 mm of surface material is glued on two surfaces of the substrate, which are surrounded by waterproof material to perform edge sealing treatment to further improve the strength and elastic modulus of the panel and to maintain its mechanical and logistics properties for a long time. The performance of container flooring made of the substrate according to this method can meet the industrial requirements on containers in terms of density, strength, elastic modulus and surface quality and so on. However, the method uses medium-density wood and bamboo instead of tropical rainforest high-density hardwood, requires 19 to 21 layers of glued sheets, and thus has complex processes. In addition, it still consumes a large number of native tree species.

CN1287960A discloses a larch container flooring and its manufacturing method, wherein the larch is softened and degreased by heating in water bath, rotationally cut into veneer, refurbished, assembled, and hot-pressed to obtain the container flooring. The flooring made by this method can replace the traditional tropical hardwood plywood flooring. Although the method does not use imported tropical rainforest high-density hardwood species, it still uses the native species of larch and thus leads to consumption of a large number of domestic native tree species. The method has been not in line with the economic development situation due to China's comprehensive control of natural forest harvesting today. Moreover, the method requires 19 to 21 layers of glued sheets, and complex processes.

CN2516497Y discloses a composite wood container flooring. The composite wood container flooring comprises a core layer having a surface layer on each side of the core layer. The core layer is made of 17 to 21 layers of veneers having a thickness of 1.7 mm or 1.8 mm, each of which is glued. The surface layers are composed of 1 to 3 layers of veneers having a thickness of 1.7 mm. There is a transverse veneer between every two vertical veneers in the core layer. The container flooring maintains the original container appearance, meets the requirements of container maintenance, and further improves the performance of flooring, so that it is easy to nail and reduce its weight. The container flooring according to this method is mainly used to meet the requirements of container maintenance. The method still has to use forest wood, and requires complex processes.

CN1583526A discloses a high-strength composite plywood for container flooring. The plywood includes a surface board, a long middle board and a core board. The middle layer of the plywood is a medium-density fiberboard or particleboard. The surface board made of tropical broadleaf hardwood is symmetrically arranged as a veneer on each side of the medium-density fiberboard or particleboard. The veneers from the long middle board most inside the surface board to the fiberboard are orthogonally arranged. The invention utilizes medium-density fiberboards or particleboards made of branches of trees as the core layer of the plywood, and tropical broadleaf hardwood only as the surface boards. Although the requirement on the materials used in this technology is relatively low, it still needs to use tropical broadleaf hardwood and wood.

The manufacturing technology of container flooring disclosed in the prior art cannot or can only partially reduce the use of tropical rainforest hardwood and other natural wood species, but never avoids it. In addition, their manufacturing processes are complex.

### Summary of the invention

It is an object of the present invention to provide a polyurethane composite panel for container flooring. The polyurethane composite panel for container flooring according to the invention comprises two fiber-reinforced material layers and a polyurethane layer, wherein the polyurethane layer is applied between the two fiber-reinforced material layers with the polyurethane penetrating into the fiber-reinforced material layers. According to the invention, the polyurethane layer is obtained from the reaction of a polyurethane system comprising:
(A) di and/or polyisocyanate(s) of a general formula R(NCO)n, wherein R is an aliphatic radical having 2 to 18 carbon atoms, an aromatic radical having 6 to 15 carbon atoms or an araliphatic radical having 8 to 15 carbon atoms, and n = 2 to 4, and
(B) a polyol component comprising
   (B1) one or more polyether polyol(s) having a functionality of preferably 2 to 8, more preferably 3 to 6, and a hydroxyl value of preferably 200 to 1000, more preferably 250 to 800; wherein at least one polyether polyol is prepared by using amines as a starter molecule and has a functionality of preferably 3 to 5, more preferably 4, and a content of 30 to 70 wt.%, preferably 40 to 60 wt.%, and more preferably 45 to 55 wt.%, based on the amount of the component (B) being 100 wt.%,
   (B2) one or more chain extender(s) having a content of preferably not more than 25 wt.%, and more preferably not more than 20 wt.%, based on the amount of the component (B) being 100 wt.%,
   (B3) one or more catalyst(s), and
   (B4) one or more foaming agent(s) having a content of 0.0 to 4.5 wt.%, based on the amount of the component (B) being 100 wt.%.

It is another object of the present invention to provide a method for preparing a polyurethane composite panel for container flooring. In the method for preparing a polyurethane composite panel for container flooring provided according to the invention, the panel comprises two fiber-reinforced material layers and a polyurethane layer, wherein the polyurethane layer is applied between the two fiber-reinforced material layers with the polyurethane penetrating into the fiber-reinforced material layers, wherein the polyurethane and the polyurethane layer are obtained from the reaction of a polyurethane system comprising:
(A) di and/or polyisocyanate(s) of a general formula R(NCO)n, wherein R is an aliphatic radical having 2 to 18 carbon atoms, an aromatic radical having 6 to 15 carbon atoms or an araliphatic radical having 8 to 15 carbon atoms, and n = 2 to 4, and
(B) a polyol component comprising
   (B1) one or more polyether polyol(s) having a functionality of preferably 2 to 8, more preferably 3 to 6, and a hydroxyl value of preferably 200 to 1000, more preferably 250 to 800; wherein at least one polyether polyol is prepared by using amines as a starter molecule and has a functionality of preferably 3 to 5, more preferably 4, and a content of 30 to 70 wt.%, preferably 40 to 60 wt.%, and more preferably 45 to 55 wt.%, based on the amount of the component (B) being 100 wt.%,
   (B2) one or more chain extender(s) having a content of preferably not more than 25 wt.%, and more preferably not more than 20 wt.%, based on the amount of the component (B) being 100 wt.%,
   (B3) one or more catalyst(s), and
   (B4) one or more foaming agent(s) having a content of 0.0 to 4.5 wt.%, based on the amount of the component (B) being 100 wt.%,
   the method comprising the steps of:
   1) disposing two parts of fiber-reinforced material respectively on the inner surface of the upper cover and the inner surface of the lower cover of a forming mold for panel,
   2) injecting the polyurethane system in-between the two parts of fiber-reinforced material on the inner surfaces of the upper and the lower covers of the mold,
   3) closing the mold, and maintaining a mold temperature of 30 to 90 °C, preferably 40 to 60 °C, and a mold clamping pressure of about 10 kg/cm²,
   4) reacting and curing the polyurethane system,
   5) opening the mold to obtain the panel.

Another object of the present invention is the use of the polyurethane composite panel for container flooring provided according to the invention in the production of a container and the container itself produced accordingly.

The fiber-reinforced material is preferably selected from one or more of glass fiber mesh, alkali-free glass fiber mesh, glass fiber felt, short glass fiber mat, random glass fiber mesh, as well as nonwoven fabrics and woven fabrics of polymer fiber, carbon fiber, aramid fiber, and mixtures thereof.

The fiber-reinforced material has a mass per unit area of 300 to 1800 g/m², preferably 500 to 1500 g/m², and more preferably 600 to 1300 g/m². The fiber-reinforced material is preferably subjected to a surface treatment before contacting with the polyurethane, preferably with an agent for the surface treatment being a silane coupling agent.

Preferably, the amine used as a starter molecule for the polyether polyol(s) is ethylene diamine.

The polyurethane composite panel for container flooring according to the invention has good strength, rigidity and durability, and can meet the high requirements of container flooring in terms of such as durability, transverse and longitudinal strength, bending strength and rigidity. In comparison with the prior art, the present invention can avoid the extensive use of tropical rainforest hardwood panel and other natural wood panels in the production of traditional container flooring, simplify the many and complex processes in the production of traditional container flooring and thus significantly improve the productivity.

### Brief description of the figures

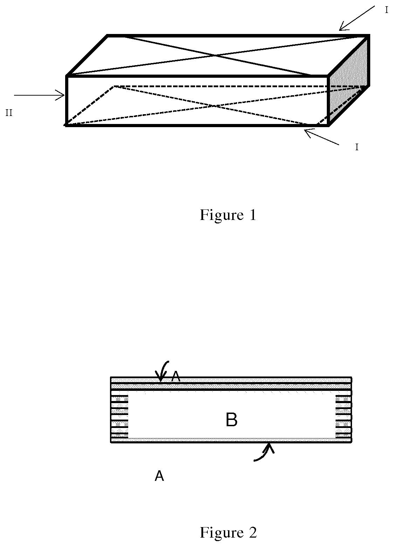

Figures 1 and 2 are schematic views of the structure of the polyurethane composite panel for container flooring according to the invention.
Figure 1 is a schematic view of the structure of the polyurethane composite panel for container flooring, wherein I is the fiber-reinforced material and II is the polyurethane foam.
Figure 2 is a schematic view of the structure of the polyurethane composite panel for container flooring, wherein A is the fiber-reinforced material and B is the polyurethane foam or composite.

The accompanying figures are provided for further description of specific embodiments and methods according to the invention, and thus are illustrative and non-restrictive.

### Detailed description of the invention

### Polyurethane system

The polyurethane system of the present invention is a rigid polyurethane system which can be divided into a one-component reaction system, a two-component reaction system or a multi-component system according to the combination state of individual components.

The two-component rigid polyurethane system indicates that all of the components contained are divided into two major components, namely, component A and component B. Component A generally and in the present invention refers to isocyanate components. Component B generally and in the present invention refers to all other components. Preferably, the rigid polyurethane system according to the invention is a two-component reaction system.

The one-component rigid polyurethane system contains all the components mixed together. The multi-component rigid polyurethane system indicates that all the components contained are divided into multiple components. The components and their amounts used in the one-component or multi-component rigid polyurethane system can be determined by referring to those used in the two-component rigid polyurethane system.

In the following, a two-component polyurethane system comprising components A and B is described as an example, wherein component A is isocyanate components and component B contains all other components.

The polyurethane system comprises the following reactive components:
(A) di and/or polyisocyanate(s) of a general formula R(NCO)n, wherein R is an aliphatic radical having 2 to 18 carbon atoms, an aromatic radical having 6 to 15 carbon atoms or an araliphatic radical having 8 to 15 carbon atoms, and n = 2 to 4,
(B) a polyol component comprising
   (B1) one or more polyether polyol(s) having a functionality of preferably 2 to 8, more preferably 3 to 6, and a hydroxyl value of preferably 200 to 1000, more preferably 250 to 800; wherein at least one polyether polyol is prepared by using amines as a starter molecule and has a functionality of preferably 3 to 5, more preferably 4, and a content of 30 to 70 wt.%, preferably 40 to 60 wt.%, and more preferably 45 to 55 wt.%, based on the amount of the component (B) being 100 wt.%,
   (B2) one or more chain extender(s) having a content of preferably not more than 25 wt.%, and more preferably not more than 20 wt.%, based on the amount of the component (B) being 100 wt.%,
   (B3) one or more catalyst(s), and
   (B4) one or more foaming agent(s) having a content of 0.0 to 4.5 wt.%, based on the amount of the component (B) being 100 wt.%.

### (A) Isocyanate components

Any organic polyisocyanates, including aromatic, aliphatic and alicyclic polyisocyanates and combinations thereof, may be used to prepare the rigid polyurethanes according to the invention. The polyisocyanates can be represented by a general formula R(NCO)n, wherein R is an aliphatic radical having 2 to 18 carbon atoms, an aromatic radical having 6 to 15 carbon atoms or an araliphatic radical having 8 to 15 carbon atoms, and n = 2 to 4.

Useful polyisocyanates include, but are not limited to, vinyl diisocyanate, tetramethylene-1,4-diisocyanate, hexamethylene-diisocyanate (HDI), dodecyl-1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydro-tolylene-2,4-diisocyanate, hexahydro-phenylene-1,3-diisocyanate, hexahydro-phenylene-1,4-diisocyanate, perhydro-diphenylmethane 2,4-diisocyanate, perhydro-diphenylmethane 4,4-diisocyanate, phenylene-1,3-diisocyanate, phenylene-1,4-diisocyanate, stilbene-1,4-diisocyanate, 3,3-dimethyl-4,4-diphenyl-diisocyanate, tolylene-2,4-diisocyanate (TDI), tolylene-2,6-diisocyanate (TDI), diphenylmethane-2,4'-diisocyanate (MDI) diphenylmethane-2,2'-diisocyanate (MDI), diphenylmethane-4,4'-diisocyanate (MDI), diphenylmethane diisocyanate and/or a mixture of diphenylmethane diisocyanate homologs having more rings, polymethylene polyphenyl polyisocyanate (polymeric MDI), naphthalene-1,5-diisocyanates (NDI), their isomers, and any mixtures thereof with their isomers.

Useful polyisocyanates also include isocyanates modified with carbodiimide, allophanate or isocyanates; preferably but not limited to, diphenylmethane diisocyanate, carbodiimide-modified diphenylmethane diisocyanate, their isomers, any mixtures thereof with their isomers.

The polyisocyanates used in the present invention include isocyanate dimers, trimers, tetramers or combinations thereof.

In a preferred embodiment of the present invention, the isocyanate component A) is selected from the group consisting of diphenylmethane diisocyanate (MDI), polymethylene polyphenyl polyisocyanate (polymeric MDI), as well as their polymers, prepolymers or combinations thereof.

Useful polyisocyanates further include isocyanate prepolymers. Such isocyanate prepolymers and methods for their preparation are well known in the art.

The isocyanates or isocyanate prepolymers have a NCO content of preferably 8 to 33 wt.%, more preferably 22 to 32 wt.% (measured according to DIN EN ISO 11 909).

### (B) Polyol components

(B1) one or more polyether polyol(s), wherein at least one polyether polyol is a polyol starting from amines. The polyether polyols have a functionality of preferably 2 to 8, more preferably 3 to 6, and a hydroxyl value of preferably 50 to 1200, more preferably 200 to 800. In the present invention, the polyether polyols starting from amines have a content of 20 to 80 wt.%, preferably 30 to 50, based on the amount of the component (B) being 100 wt.%.

The polyether polyols may be prepared by known processes. They are synthesized from ethylene oxide or propylene oxide with ethylene glycol, 1,2-propanediol, 1,3-propanediol, diethylene glycol, glycerol, trimethylolpropane, pentaerythritol, triethanolamine, toluylene diamine, sorbitol, sucrose, or any combination thereof as a starting molecule.

In addition, the polyether polyols may also be prepared by reacting at least one alkylene oxide having 2 to 4 carbon atoms in its alkylene group with a compound containing 2 to 8, preferably but not limited to 3 to 8 active hydrogen atoms or other reactive compounds in the presence of a catalyst. Examples of such a catalyst are alkali metal hydroxides such as sodium hydroxide, potassium hydroxide, or alkali metal alkoxides such as sodium methoxide, sodium ethoxide, potassium ethoxide or potassium isopropoxide.

Useful alkylene oxides include, but are not limited to, tetrahydrofuran, ethylene oxide, 1,2-propylene oxide, 1,2-butylene oxide, 2,3-butylene oxide, styrene oxide and any mixtures thereof.

Useful compounds containing active hydrogen atoms include polyhydroxy compounds, preferably but not limited to, water, ethylene glycol, 1,2-propanediol, 1,3-propanediol, diethylene glycol, trimethylolpropane and any mixtures thereof; more preferably polyhydric, especially trihydric or higher alcohols such as glycerol, trimethylolpropane, pentaerythritol, sorbitol and sucrose.

Useful compounds containing active hydrogen atoms also include, but are not limited to, organic dicarboxylic acids such as succinic acid, adipic acid, phthalic acid and terephthalic acid, or aromatic or aliphatic substituted diamines such as ethane diamine, diethylene triamine, triethylene tetramine, propane diamine, butane diamine, hexane diamine or toluylene diamine.

Useful other reactive compounds include ethanolamine, diethanolamine, methylethanolamine, ethylethanolamine, methyldiethanolamine, ethyldiethanolamine, triethanolamine and ammonia.

The polyether polyols prepared with amines as a starter molecule include the compound obtained from the reaction of an amine as a starter molecule with an alkylene oxide.

In the present invention, the term "alkylene oxides" generally refers to compounds of a general formula (I): 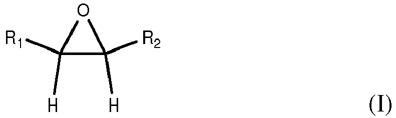 wherein R₁ and R₂ are independently selected from H, linear and branched C₁-C₆-alkyl groups, as well as phenyl and substituted phenyl groups.

Preferably, R₁ and R₂ are independently selected from H, methyl, ethyl, propyl and phenyl.

Methods for the preparation of alkylene oxides are known to those skilled in the art, for example, by oxidation of an olefin compound.

Examples of useful alkylene oxides according to the invention include, but are not limited to, ethylene oxide, 1,2-propylene oxide, 1,2-butylene oxide, 2,3-butylene oxide, styrene oxide or a mixture thereof, and particularly preferably a mixture of ethylene oxide and 1,2-propylene oxide.

In the present invention, the term "alkylene oxides" also includes oxa-cycloalkanes, which include, but are not limited to, tetrahydrofuran and oxetane.

In the present invention, the term "amines" refers to a compound containing a primary, secondary, tertiary amino group or a combination thereof. Examples of the amines according to the invention include, but are not limited to, triethanolamine, ethane diamine, toluylene diamine, diethylene triamine, triethylene tetramine and their derivatives, preferably ethane diamine, toluylene diamine, particularly preferably toluylene diamine.

Examples of the polyether polyols according to the invention are selected from the group consisting of polyether polyols obtained by ring-opening polymerization of propylene oxide with ethane diamine as a starter molecule, by ring-opening copolymerization of ethylene oxide and propylene oxide with ethane diamine as a starter molecule, by ring-opening polymerization of propylene oxide with toluylene diamine as a starter molecule, by ring-opening polymerization of propylene oxide with toluylene diamine as a starter molecule and ethylene oxide as a blocking agent, by ring-opening polymerization of ethylene oxide with toluylene diamine as a starter molecule and propylene oxide as a blocking agent.

In this context, the hydroxyl values are measured according to methods well known to those skilled in the art, for example, published in Houben Weyl, Methoden der Organischen Chemie, vol. XIV/2 Makromolekulare Stoffe, p.17, Georg Thieme Verlag; Stuttgart 1963, the entire contents of which are incorporated herein by reference.

Examples of the polyether compositions according to the invention include, but are not limited to, GR 403 (ethane diamine as the starter molecule, a hydroxyl value of 760), GR405 (ethane diamine as the starter molecule, a hydroxyl value of 450 mg KOH/g), GNT-400 (a mixture of toluylene diamine and triethanolamine as the starter molecule, a hydroxyl value of 400 mg KOH/g) available from Shanghai Gaoqiao Branch of China Petrochemical Co., Ltd, as well as Desmophen 4050 E (ethane diamine as the starter molecule, a hydroxyl value of 620 mg KOH/g), Desmophen 4051 B (ethane diamine as the starter molecule, a hydroxyl value of 470 mg KOH/g) available from Covestro Polymers (China) Co., Ltd.

### (B2) Chain extenders

The chain extenders are usually an active hydrogen atom-containing compound having a molecular weight of less than 800, preferably an active hydrogen atom-containing compound having a molecular weight of 18 to 400.

The chain extenders have a content of preferably not more than 25 wt.%, more preferably not more than 20 wt.%, based on the amount of the component (B) being 100 wt.%.

Useful active hydrogen atom-containing compounds include, but are not limited to, alkyl diols, dialkylene glycols, polyalkyl polyols, any mixtures thereof, such as ethylene glycol, 1,4-butanediol 1,6-hexanediol, 1,7-heptanediol, 1,8-octanediol, 1,9-nonanediol, 1,10-decanediol, diethylene glycol, dipropylene glycol, polyoxyalkylene glycol, any mixtures thereof.

Useful active hydrogen atom-containing compounds may also include other grafted or unsaturated alkyl diols, any mixtures thereof, such as 1,2-propanediol, 2-methyl-1,3-propanediol, 2,2-dimethyl-1,3-propanediol, 2-butyl-2-ethyl-1,3-propanediol, 2-butene-1,4-diol, 2-butyne-1,4-diol, alkanolamine, N-alkyl dialkanolamines such as ethanolamine, 2-propanolamine, 3-amino-2,2-dimethylpropanol, N-methyldiethanolamine, N-ethyldiethanolamine, any mixtures thereof.

Useful active hydrogen atom-containing compounds may also include aliphatic amines, aromatic amines, any mixtures thereof, such as 1,2-ethanediamine, 1,3-propanediamine, 1,4-butanediamine, 1,6-hexanediamine, isophorone diamine, 1,4-cyclohexanediamine, N,N'-diethyl-phenylenediamine, 2,4-diaminotoluene, 2,6-diaminotoluene, any mixtures thereof.

### (B3) Catalyst component

The catalyst is used in an amount of 0.001 to 10 wt.%, based on the amount of the component (B) being 100 wt.%.

The catalysts preferably include, but are not limited to, amine catalysts, organometallic catalysts, any mixtures thereof, which are known to those skilled in the art.

Useful amine catalysts preferably include, but are not limited to, triethylamine, tributylamine, triethylenediamine, N-ethylmorpholine, N,N,N',N'-tetramethyl-ethanediamine, pentamethyldiethylene-triamine, N,N-methylaniline, N,N-dimethylaniline, any mixtures thereof. The organometallic catalysts preferably include, but are not limited to, organotin compounds such as tin(II) acetate, tin(II) octoate, tin ethylhexanoate, tin laurate, dibutyltin oxide, dibutyltin dichloride, dibutyltin diacetate, dibutyltin maleate, dioctyltin diacetate, any mixtures thereof.

### (B4) Foaming agent component

The foaming agent(s) may be selected from various physical foaming agents or chemical foaming agents.

Useful foaming agents preferably include, for example, water, halogenated hydrocarbons, and hydrocarbon compounds. Useful halogenated hydrocarbons preferably include monochlorodifluoromethane, dichloromonofluoromethane, dichlorofluoromethane, trichlorofluoromethane, any mixtures thereof. Useful hydrocarbon compounds preferably include butane, pentane, cyclopentane, hexane, cyclohexane, heptane, any mixtures thereof.

Particularly preferably, the foaming agent is water.

The amount of the foaming agent(s) used depends on the density of the desired rigid polyurethane material. In the rigid polyurethane system, the amount of the foaming agent(s) used is 0.0 to 10 wt.%, preferably 0.5 to 5 wt.%, particularly preferably 0.6 to 4 wt.%, based on the used amount of all the polyols in component B (including the polyols as reactive components as well as those used as chain extenders and in other components).

The component (B) may further comprise a polyester polyol.

The polyester polyol has a functionality of preferably 2 to 6, particularly preferably 2 to 4, and a hydroxyl value of preferably 50 to 1000, particularly preferably 100 to 800.

The polyester polyol comprises a reaction product of a small molecule polyol and a polycarboxylic acid or its anhydride.

Useful polycarboxylic acids include, but are not limited to, aromatic, alicyclic, aliphatic, heterocyclic polycarboxylic acids. They may be substituted by halogen atoms, and may be unsaturated. Examples of useful polycarboxylic acids include succinic acid, malonic acid, glutaric acid, adipic acid, suberic acid, azelaic acid, sebacic acid, phthalic acid, isophthalic acid, maleic acid, dimeric or trimeric fatty acid.

Useful polycarboxylic anhydrides include, but are not limited to, phthalic anhydride, tetrachlorophthalic anhydride, hexahydrophthalic anhydride, maleic anhydride, glutaric anhydride or any mixtures thereof.

In addition to the above polycarboxylic acids, the corresponding polycarboxylic anhydrides, the following polycarboxylic anhydrides with lower alcohols or any mixtures thereof may also be used to prepare the polyester polyol according to the invention. Polycarboxylic anhydrides preferably include, but are not limited to, terephthalic anhydride. The lower alcohols preferably include, but are not limited to, ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, 1,8-octanediol, neopentyl glycol, cyclohexanedimethanol, 1,10-decanediol, glycerol, tetraethylene glycol, trimethylolpropane or any mixtures thereof.

The polyester polyol may also contain a portion of carboxyl end group, or be prepared by using a lactone or a hydroxycarboxylic acid such as ω-glycolic acid. The lactones used for preparing polyester polyol preferably include, but are not limited to, ε-caprolactone.

The component (B) may further comprise a flame retardant.

Useful flame retardants preferably include, but are not limited to, phosphates, phosphites, inorganic flame retardants. The inorganic flame retardants may be selected, for example, from red phosphorus, antimony trioxide, aluminum hydroxide, magnesium hydroxide, arsenic oxide, polyphosphoric acid amine or any mixtures thereof. The flame retardant is used in an amount of 10 to 30 wt.%, based on the amount of the component (B) being 100 wt.%.

The component (B) may further comprise a surfactant.

The surfactants include, for example, compounds that may promote uniform mixing of the starting materials or adjust the micropore structure of a polyurethane foam. Suitable surfactants preferably include, but are not limited to, ethylene oxide-modified siloxane derivatives. The surfactant is used in an amount of 0.01 to 5 wt.%, based on the amount of the component (B) being 100 wt.%.

In the rigid polyurethane system, the molar ratio of NCO group to OH group is preferably, but not limited to, 70-130:100, particularly preferably 90-125:100. The moles of NCO group are based on the molar content of NCO of the isocyanates in component (A). The moles of OH group are based on the total amount of OH contained in all components of the rigid polyurethane reaction system such as polyols, chain extenders, fillers, foaming agents. NCO is measured according to DIN EN ISO 11 909.

### Fiber-reinforced materials

In the present invention, the fiber-reinforced material is selected from one or more of glass fiber mesh, alkali-free glass fiber mesh, C glass fiber mesh, glass fiber felt, short glass fiber mat, random glass fiber mesh, as well as nonwoven fabrics and woven fabrics of polymer fiber, carbon fiber, aramid fiber, and mixtures thereof.

The fiber-reinforced material has a mass per unit area of 300 to 1800 g/m², preferably 500 to 1500 g/m², and more preferably 600 to 1300 g/m². The fiber-reinforced material is preferably subjected to a surface treatment before contacting with the polyurethane, more preferably with an agent for the surface treatment comprising a silane coupling agent.

It is possible to determine how many layers are needed to achieve the desired mass per unit area of fiber-reinforced material on basis of the mass per unit area of the commercially available fiber-reinforced material.

The fiber-reinforced material is preferably subjected to a surface treatment before contacting with the polyurethane, preferably with an agent for the surface treatment being a silane coupling agent.

### Polyurethane composite panel for container flooring

The polyurethane composite panel for container flooring provided by the invention comprises two fiber-reinforced material layers and a polyurethane layer, wherein the polyurethane layer is applied between the two fiber-reinforced material layers with the polyurethane penetrating into the fiber-reinforced material layers.

The polyurethane layer is obtained by foaming the polyurethane system.

The polyurethane layer may comprise, in addition to the polyurethane system foaming resin, a structural material, preferably one or more of honeycomb paper, wood, wood fragments. The structural material and the injected partial polyurethane system form the polyurethane layer.

The polyurethane composite panel for container flooring according to the invention has a density of 250 to 1800 kg/m³, preferably 600 to 1500 kg/m³, and particularly preferably 700 to 1200 kg/m³, and a hardness of 50 Shore-A to 88 Shore-D, preferably 70 Shore-A 70 to 80 Shore-D.

### Method for preparing a polyurethane composite panel for container flooring

In the present invention, the serial numbers of the process steps are provided for convenience of description and understanding, and thereby should not be regarded or construed as limiting the sequence of steps.

The polyurethane composite panel for container flooring provided by the present invention can be produced by the following method:
1) disposing two parts of fiber-reinforced material respectively on the inner surface of the upper cover and the inner surface of the lower cover of a forming mold for panel,
2) injecting the polyurethane system in-between the two parts of fiber-reinforced material on the inner surfaces of the upper and the lower covers of the mold,
3) closing the mold, and maintaining a mold temperature of 30 to 90 °C, preferably 40 to 60 °C, and a mold clamping pressure of about 10 kg/cm²,
4) reacting and curing the polyurethane system,
5) opening the mold to obtain the panel.

The forming mold for panel may be made of a metallic material such as steel or aluminum, or may be an epoxy resin mold or other molds commonly used for the foaming of a rigid polyurethane system.

The mold may include suitable heating means and temperature control means to ensure a certain mold temperature during the foaming of the polyurethane system.

The mold may comprise suitable pressure control means, such as a clamping device or a hydraulic device, to ensure a certain in-mold pressure during the foaming of the polyurethane system.

The mold temperature during the foaming of the polyurethane system should be 40 to 90 °C, preferably 50 to 80 °C, more preferably 60 to 70 °C. The mold clamping pressure is about 10 kg/cm².

The method for preparing a polyurethane composite panel for container flooring provided by the present invention may further comprise the step of disposing a structural material between the fiber-reinforced materials on the upper and the lower covers, wherein the structural material preferably includes one or more of honeycomb paper, wood, wood fragments. The structural material and the injected partial polyurethane system form the polyurethane layer. Honeycomb paper, wood, wood fragments and the like, which are included in the structural material, can reduce the used amount of the polyurethane system and increase the rigidity of the panel. The structural material is used in an amount of preferably 10 to 50 wt.%, more preferably 20 to 35 wt.%, based on the total amount of the foam composite components.

The size of the polyurethane composite panel for container flooring prepared according to the invention may be set as required without being limited to the size of the wood used in the prior art, and the shape may be set as required without being limited to conventional rectangular shape.

The polyurethane composite panel for container flooring prepared according to the invention can be used for the manufacture of containers either directly or as required after cutting or other necessary subsequent treatments.

### Containers

The present invention also refers to the use of the polyurethane composite panel for container flooring provided according to the invention for the manufacture of containers and the resulting containers.

The following examples further illustrate the manufacturing method of the polyurethane composite panel for container flooring according to the invention and its use as container flooring. The spirit or scope of the invention set forth in the above description is not to be limited to these examples. Those skilled in the art will readily appreciate that these polyurethane composites may be prepared by using the conditions and processes or variations of the manufacturing steps in the examples below.

**The raw materials and equipments mentioned in the context are described below**

| **Product names** | **Starter molecules** | **Hydroxyl value KOH mg/g** | **Functionality** | **Manufacturer** |
|---|---|---|---|---|
| Desmophen 4050 E | Ethylenediamine | 620 | 4.0 | Covestro Polymers (China) Co., Ltd |
| Desmophen 4051 B | Ethylenediamine | 470 | 4.0 | Covestro Polymers (China) Co., Ltd |
| Arcol 1026 | Propanediol | 28 | 2.0 | Covestro Polymers (China) Co., Ltd |
| Arcol 1021 | Propanediol | 56 | 2.0 | Covestro Polymers (China) Co., Ltd |
| Arcol 3553 | Glycerol | 35 | 3.0 | Covestro Polymers (China) Co., Ltd |
| Arcol 1362 | Glycerol | 28 | 3.0 | Covestro Polymers (China) Co., Ltd |
| Arcol 3601 | Sucrose/Glycerol | 360 | 4.2 | Covestro Polymers (China) Co., Ltd |
| Arcol 3607 | Sucrose/Glycerol | 450 | 4.7 | Covestro Polymers (China) Co., Ltd |
| Desmophen 21AP27 | Sucrose/Ethylene glycol | 440 | 2.8 | Covestro Polymers (China) Co., Ltd |
| JH 220 | Propanediol | 56 | 2.0 | Jiahua Chemicals Inc. |
| JH 635 | Sorbitol/Glycerol | 500 | 4.5 | Jiahua Chemicals Inc. |
| JH 403 | Ethylenediamine | 770 | 4.0 | Jiahua Chemicals Inc. |
| JH 405 | Ethylenediamine | 450 | 4.0 | Jiahua Chemicals Inc. |
| JH 303 | Glycerol | 480 | 3.0 | Jiahua Chemicals Inc. |
| Stepanpoly | Phthalic | 240 | 2.0 | USA STEPAN |
| PS-2312 | anhydride polyol | | | Company |

| **Product names** | **NCO%** | **Viscosity** | **Manufacturer** |
|---|---|---|---|
| Desmodur 44 V20L | 31.5 | 200 | Covestro Polymers (China) Co., Ltd |
| Desmodur 44 P90 | 28.2 | 125 | Covestro Polymers (China) Co., Ltd |
| Desmodur 1511L | 31.5 | 200 | Covestro Polymers (China) Co., Ltd |
| Desmodur 20IK10 | 28.5 | 3300 | Covestro Polymers (China) Co., Ltd |
| Desmodur 1506 | 28.3 | 125 | Covestro Polymers (China) Co., Ltd |

EKB800 (+45,-45)PU: a glass fiber multiaxial fabric. Weaving mode: Tricot. Area weight: 812 g/m²
EKU 1150(0) PU: a glass fiber multiaxial fabric. Weaving mode: Tricot. Area weight: 1200 g/m²
EKU 1200(0) PU (TM+): a glass fiber multiaxial fabric. Weaving mode: Tricot. Area weight: 1244 g/m²
EKT 1250(0,+45,-45)PU: a glass fiber multiaxial fabric. Weaving mode: Tricot. Area weight: 1250 g/m²
HK-1250 conventional high-pressure casting machine: available from Hennecke.
H-XP3 conventional high-pressure sprayer: available from GRACO.
PU20J-R/Y conventional low-pressure casting foam machine: available from Zhejiang Fly-Dragon Electrical Co., Ltd.
Main mechanical properties of plywood container flooring - GB/T-19536-2004

| | | |
|---|---|---|
| Density | kg/m³ | ≥ 750 |
| Bending strength - rift grain | MPa | ≥ 85 |
| Bending strength - cross grain | MPa | ≥ 35 |
| Elastic modulus - rift grain | MPa | ≥ 10 000 |
| Elastic modulus - cross grain | MPa | ≥ 3500 |

Hereinafter, the present invention will be further described with reference to examples.

### Example 1

EKB800 (+45,-45)PU: a glass fiber multiaxial fabric having an area weight of 800 g/m² was first put into a mold. The rigid polyurethane system comprising the components and their amounts listed in Table 1-1 was injected into the mold (at a mold temperature of 50-60 °C) by using a HK1250 conventional high-pressure casting machine. The rigid polyurethane system reacted, foamed and cured to form a molding panel in the mold. A polyurethane composite panel for container flooring was obtained after opening the mold.

The physical and mechanical properties of the resulting polyurethane material are shown in Table 1-1.

| **Items** | **Unit** | **Amount** | **Material properties / Test standards** |
|---|---|---|---|
| 4050 E | Parts by weight | 40.00 | 25 °C |
| 4051 B | Parts by weight | 10.00 | 25 °C |
| Arcol 1026 | Parts by weight | 25.00 | 25 °C |
| Arcol 3553 | Parts by weight | 24.99 | 25 °C |
| | | | |
| Polyether composition | Parts by weight | 100.00 | |
| 44P90 | Parts by weight | 100.00 | Standard |
| EKB800 (+45,-45) PU | Parts by weight | 16 | |
| Density | kg/m³ | 1200 | DIN EN ISO 845 |
| Hardness | Shore D | 80 | DIN 53505 |
| Bending strength | MPa | 100 | DIN EN ISO 178 |
| Elastic Modulus | MPa | 15000 | DIN EN ISO 178 |

Example 1 illustrates that the above-mentioned molded polyurethane layer has a relatively high hardness and tensile strength and thereby can be used under glass fiber reinforcement in place of high-performance wood.

### Example 2

The reaction system comprising the components and their amounts listed in Table 2-1 was injected (injection time < 4s) into a mold (a feed temperature of 25 °C, a mold temperature of 60-65 °C) by using a HK 1250 conventional high-pressure injection machine. EKU 1150(0) PU: a glass fiber multiaxial fabric having an area weight of 1200 g/m² was first put into the mold. The system reacted (a NCO index of 110 in reaction) for 10 min and then demolded to form a molded polyurethane material. The physical and mechanical properties of the resulting molded polyurethane material are listed in Table 2-1.

**Table 2-1**

| **Items** | **Unit** | **Amount** | **Material properties / Test standards** |
|---|---|---|---|
| GR 403 | Parts by weight | 35.00 | 25 °C |
| GR 405 | Parts by weight | 20.00 | 25 °C |
| GE 303 | Parts by weight | 15.00 | 25 °C |
| GE 220 | Parts by weight | 30.00 | 25 °C |
| | | | |
| Polyether composition | Parts by weight | 100.00 | |
| 44V20 L | Parts by weight | 100.00 | Standard |
| EKU 1150(0) PU | Parts by weight | 16 | |
| Density | kg/m³ | 1200 | DIN EN ISO 845 |
| Hardness | Shore D | 82 | DIN 53505 |
| Bending strength | MPa | 140 | DIN EN ISO 178 |
| Elastic Modulus | MPa | 16000 | DIN EN ISO 178 |

Example 2 illustrates that the molded polyurethane layer has a relatively high hardness and tensile strength and thereby can be used under glass fiber reinforcement in place of high-performance wood. In addition, the desired products can be produced in batch within a relatively short period of time due to rapid reaction rate of the system and short stripping time.

### Example 3

EKU 1200(0) PU (TM+): a glass fiber multiaxial fabric having an area weight of 1244 g/m² was first put into a mold. The reaction system comprising the components and their amounts listed in Table 3-1 was injected into the closed mold (at a temperature of 55-60 °C) by using a HK1250 conventional high-pressure injection machine. The system reacted (a NCO index of 110 in reaction), foamed and cured to form a molded polyurethane material. The physical and mechanical properties of the resulting molded polyurethane material are listed in Table 3-1.

**Table 3-1**

| **Items** | **Unit** | **Amount** | **Material properties / Test standards** |
|---|---|---|---|
| Desmophen 4050E | Parts by weight | 32 | 25 °C |
| GR 405 | Parts by weight | 22 | 25 °C |
| Desmophen 21AP27 | Parts by weight | 21 | 25 °C |
| Arcol 1362 | Parts by weight | 35 | 25 °C |
| Polyol mixture | Parts by weight | 100 | 25 °C |
| Desmodur PU 44P90 | Parts by weight | 100 | 25 °C |
| EKU 1200(0) PU (TM+) | Parts by weight | 15 | |
| Physical and mechanical properties | | | |
| Density | kg/m³ | 1200 | DIN EN ISO 845 |
| Hardness | Shore D | 78 | DIN 53505 |
| Bending strength | MPa | 140 | DIN EN ISO 178 |
| Elastic Modulus | MPa | 16500 | DIN EN ISO 178 |

Example 3 illustrates that the above-mentioned molded polyurethane layer has a relatively high hardness and tensile strength and thereby can be used under glass or other fiber reinforcement in place of high-performance wood.

### Example 4

EKT 1250(0,+45,-45)PU: a glass fiber multiaxial fabric having an area weight of 1250 g/m² was first put into a mold. The reaction system comprising the components and their amounts listed in Table 4-1 was injected into the mold (at a mold temperature of 40-60 °C) by using a PU20J-R/Y conventional low-pressure injection machine. The system reacted (a NCO index of 110 in reaction), foamed and cured to form a molded polyurethane material. The physical and mechanical properties of the resulting molded polyurethane material are listed in Table 4-1.

**Table 4-1: the performance of the composite based on the polyurethane system comprising polyester polyol**

| **Items** | **Unit** | **Amount** | **Material properties / Test standards** |
|---|---|---|---|
| 4050 E | Parts by weight | 40.00 | 25 °C |
| GR 635 | Parts by weight | 6.00 | 25 °C |
| Arcol 1026 | Parts by weight | 25.00 | 25 °C |
| 10WF15 | Parts by weight | 18.00 | 25 °C |
| PS 2352 (Polyester) | Parts by weight | 11.00 | 25 °C |
| Polyol mixture | Parts by weight | 100 | 25 °C |
| Desmodur 20IK10 | Parts by weight | 100 | 25 °C |
| EKT 1250(0,+45,-45)PU | Parts by weight | 18 | |
| Physical and mechanical properties | | | |
| Density | kg/m3 | 1200 | DIN EN ISO 845 |
| Hardness | Shore D | 82 | DIN 53505 |
| Bending strength | MPa | 160 | DIN EN ISO 178 |
| Elastic Modulus | MPa | 17500 | DIN EN ISO 178 |

Example 4 illustrates that the composite based on the polyurethane system comprising polyester polyol has a relatively high hardness and tensile strength and thereby can be used under glass fiber multiaxial fabric reinforcement in place of high-performance wood.

### Comparative data

Test and compare the performance of container flooring made of high-density hardwood panel (Apitong) having a size of 250*250*28 (mm³) and polyurethane composite panels comprising the following system and 16-20% glass fiber reinforcement according to the performance test method for standard container flooring of container manufacturers. The results are as follows:

| Material system | Size (mm) | Density (kg/m³) | Deformation pressure (kg) | Fracture pressure (kg) |
|---|---|---|---|---|
| High-density hardwood panel Apitong | 250*250***28** | 880 | about 160 | about 170 |
| Example 1 | 250*250***25** | 1300 | about 185 | about 200 |
| Example 2 | 250*250***25** | 1300 | about 190 | about 210 |
| Example 3 | 250*250***25** | 1250 | about 180 | about 190 |
| Example 4 | 250*250***25** | 1250 | about 180 | about 195 |

The polyurethane composite sheets synthesized by the above method fully meet the performance requirements of container flooring.

While the present invention has been disclosed by way of preferred examples, it is not intended to be limiting of the invention. Any person skilled in the art may, without departing from the spirit and scope of the invention, make a variety of changes and modifications. The scope of protection shall therefore be subject to the scope of the claims of the present application.

## Claims

1. A polyurethane composite panel for container flooring, comprising
two fiber-reinforced material layers and a polyurethane layer, wherein the polyurethane layer is applied between the two fiber-reinforced material layers with the polyurethane penetrating into the fiber-reinforced material layers,
wherein the polyurethane is obtained from the reaction of a polyurethane system comprising:
(A) di and/or polyisocyanate(s), and
(B) a polyol component comprising
(B1) one or more polyether polyol(s) having a functionality of preferably 2 to 8, more preferably 3 to 6, and a hydroxyl value of preferably 200 to 1000, more preferably 250 to 800; wherein at least one polyether polyol is prepared by using amines as a starter molecule and has a functionality of preferably 3 to 5, more preferably 4, and a content of 30 to 70 wt.%, preferably 40 to 60 wt.%, and more preferably 45 to 55 wt.%, based on the amount of the component (B) being 100 wt.%,
(B2) one or more chain extender(s) having a content of preferably not more than 25 wt.%, and more preferably not more than 20 wt.%, based on the amount of the component (B) being 100 wt.%,
(B3) one or more catalyst(s), and
(B4) one or more foaming agent(s) having a content of 0.0 to 4.5 wt.%, based on the amount of the component (B) being 100 wt.%.

2. The panel according to claim 1, wherein the polyisocyanate(s) component (A) has/have a general formula R(NCO)n, wherein R is an aliphatic radical having 2 to 18 carbon atoms, an aromatic radical having 6 to 15 carbon atoms or an araliphatic radical having 8 to 15 carbon atoms, and n = 2 to 4.

3. The panel according to claim 1, wherein the fiber-reinforced material is selected from one or more of glass fiber mesh, alkali-free glass fiber mesh, glass fiber felt, short glass fiber mat, random glass fiber mesh, as well as nonwoven fabrics and woven fabrics of polymer fiber, carbon fiber, aramid fiber, and mixtures thereof.

4. The panel according to claim 2, wherein the fiber-reinforced material is subjected to a surface treatment before contacting with the polyurethane, preferably with an agent for the surface treatment being a silane coupling agent.

5. The panel according to claim 1 or 2, wherein the fiber-reinforced material has a mass per unit area of 300 to 1200 g/m², preferably 400 to 1000 g/m², and more preferably 500 to 900 g/m².

6. The panel according to claim 1, 2 or 3, wherein the polyether polyol(s) starting from amines is/are prepared by using ethylene diamine as a starter molecule.

7. The panel according to claim 5, wherein the component (B) further comprises a polyether polyol having a functionality of preferably 2 to 6, more preferably 2 to 4, and a hydroxyl value of preferably 50 to 1000, more preferably 100 to 800, and a content of preferably less than 50 wt.%, more preferably less than 30 wt.%, based on the amount of the component (B) being 100 wt.%.

8. The panel according to claim 1, wherein the polyurethane layer comprises a filler.

9. The panel according to claim 7, wherein the filler is selected from the group consisting of honeycomb paper, wood or wood fragments.

10. The panel according to any one of claim 1, 2, 3, 7 or 8, wherein the component (B) further comprises a flame retardant and/or a surfactant, wherein the flame retardant is preferably selected from the group consisting of phosphates, phosphites, red phosphorus, antimony trioxide, aluminum hydroxide, magnesium hydroxide, arsenic oxide, ammonium polyphosphate or any mixtures thereof, and the surfactant is preferably an ethylene oxide-modified siloxane derivative.

11. A method for preparing a polyurethane composite panel for container flooring, the panel comprising two fiber-reinforced material layers and a polyurethane layer, wherein the polyurethane layer is applied between the two fiber-reinforced material layers with the polyurethane penetrating into the fiber-reinforced material layers,
wherein the polyurethane is obtained from the reaction of a polyurethane system comprising:
(A) di and/or polyisocyanate(s), and
(B) a polyol component comprising
(B1) one or more polyether polyol(s) having a functionality of preferably 2 to 8, more preferably 3 to 6, and a hydroxyl value of preferably 200 to 1000, more preferably 250 to 800; wherein at least one polyether polyol is prepared by using amines as a starter molecule and has a functionality of preferably 3 to 5, more preferably 4, and a content of 30 to 70 wt.%, preferably 40 to 60 wt.%, and more preferably 45 to 55 wt.%, based on the amount of the component (B) being 100 wt.%,
(B2) one or more chain extender(s) having a content of preferably not more than 25 wt.%, and more preferably not more than 20 wt.%, based on the amount of the component (B) being 100 wt.%,
(B3) one or more catalyst(s), and
(B4) one or more foaming agent(s) having a content of 0.0 to 4.5 wt.%, based on the amount of the component (B) being 100 wt.%,
the method comprising the steps of:
1) disposing two parts of fiber-reinforced material respectively on the inner surface of the upper cover and the inner surface of the lower cover of a forming mold for panel,
2) injecting the polyurethane system in-between the two parts of fiber-reinforced material on the inner surfaces of the upper and the lower covers of the mold,
3) closing the mold, and maintaining a mold temperature of 30 to 90 °C, preferably 40 to 60 °C, and a mold clamping pressure of about 10 kg/cm²,
4) reacting and curing the polyurethane system,
5) opening the mold to obtain the panel.

12. The method according to claim 11, wherein the polyisocyanate(s) component (A) has/have a general formula R(NCO)n, wherein R is an aliphatic radical having 2 to 18 carbon atoms, an aromatic radical having 6 to 15 carbon atoms or an araliphatic radical having 8 to 15 carbon atoms, and n = 2 to 4.

13. The method according to claim 10, wherein the fiber-reinforced material is selected from one or more of glass fiber mesh, alkali-free glass fiber mesh, glass fiber felt, short glass fiber mat, random glass fiber mesh, as well as nonwoven fabrics and woven fabrics of polymer fiber, carbon fiber, aramid fiber, and mixtures thereof.

14. The method according to claim 10 or 11, wherein the fiber-reinforced material has a mass per unit area of 300 to 1800 g/m², preferably 500 to 1500 g/m², and more preferably 600 to 1300 g/m².

15. The method according to claim 11, further comprising the step of subjecting the fiber-reinforced material to a surface treatment, preferably with an agent for the surface treatment being a silane coupling agent.

16. The method according to any one of claim 10, 11, 12 or 14, wherein the component (B) further comprises a flame retardant and/or a surfactant, wherein the flame retardant is preferably selected from the group consisting of phosphates, phosphites, red phosphorus, antimony trioxide, aluminum hydroxide, magnesium hydroxide, arsenic oxide, ammonium polyphosphate or any mixtures thereof, and the surfactant is preferably an ethylene oxide-modified siloxane derivative.

17. Use of the polyurethane composite panel for container flooring according to any one of claims 1 to 10 in the production of a container.

18. A container, wherein its flooring is made of the polyurethane composite panel for container flooring according to any one of claims 1 to 10.
